# EUROPEAN PATENT APPLICATION

(11) **EP 3 156 882 A1**
(43) Date of publication of application: **19.04.2017**
(21) Application number: 15190087.5
(22) Date of filing: 16.10.2015
(51) Int. Cl.: G06F 3/0338, G05G 9/047

(54) **POINTING DEVICE**

(71) Applicant: ETH Zurich, 8092 Zurich (CH)
(72) Inventor: HUTTER, Marco, 9230 Flawil (CH); HÖPFLINGER, Markus, 8304 Wallisellen (CH)

(57) **Abstract**

The invention relates to a pointing device (1) for controlling an apparatus, wherein the pointing device (1) comprises a chamber (2) comprising a cavity (21), an elastomer (3), which is arranged in the cavity (21) in order to provide a restoring force, and a manipulation member (4) having a manipulation section (41) and an embedded section (42), wherein the manipulation section (41) and the embedded section (42) are positioned along a longitudinal axis (5) of the manipulation member (4), and the embedded section (42) is positioned in the cavity (21) and embedded by the elastomer (3), wherein the elastomer (3) essentially fills the cavity (21).

The invention further relates to a method for manufacturing a pointing device (1) according to the present invention and a method for controlling an apparatus by means of a pointing device (1) according to the present invention.

## Description

### Field of the invention

The present invention relates to a pointing device, particularly for controlling an apparatus.

Pointing devices, such as touchpads and joysticks, have been extensively applied, particularly in consumer electronics, telecommunications, and the control of industrial machinery. For instance, pointing devices, particularly joysticks, have been used as user interfaces in game consoles, to control electric motors of toy vehicles, and to control cranes and forklifts in construction and industrial production applications.

For certain applications, it is advantageous to miniaturize a pointing device. Furthermore, especially for outdoor and/ or industrial applications, pointing devices need to be robust against exposure to particles, such as dust, and/ or liquids.

### Prior art

Analogue pointing devices are known from the prior art (EP1380927A1, EP2450777A2, WO2006035371A1, US4489303). In contrast to digital pointing devices, the signal generated by analogue pointing devices is dependent on the displacement of a manipulation member from an initial position. For instance the displacement of the manipulation member may be measured by potentiometer, wherein an electric resistance of the potentiometer changes in response to the displacement of the manipulation member.

Alternatively, the displacement of the manipulation member can be measured by a magnetic device, particularly a permanent magnet being connected to the manipulation member, and at least one magnetic field sensor, particularly a Hall sensor (EP1380927A1, EP2450777A2). Therein the strength of the magnetic field provided by the magnetic device is detected by the magnetic field sensor. Hall sensors are especially advantageous for this application, because they provide a linear signal output and function in a contact-free manner, which reduces mechanical abrasion in contrast to potentiometers.

In order to provide sensory feedback to the operator, and to restore the initial position of the pointing device in the absence of a force provided by the operator, many pointing devices use restoring elements such as springs (EP2450777A2) or elastomers (EP1380927A1, WO2006035371A1, US2009115404A1).

In pointing devices of the prior art, these elastic elastomers are arranged either internally in a chamber containing part of the manipulation member, the magnetic device and the magnetic field sensors (US2009115404A1), at the external side forming a cover to which the manipulation member is attached (EP1380927A1), or as a flexible glue connecting part of the manipulation member to the casing of the pointing device (WO2006035371A1)

### Technical problem

The problem to be solved by the present invention is to provide a cost-efficient, robust pointing device. This problem is solved by the subject-matter of the device according to claim 1 and the method according to claim 13. Additionally, a method according to claim 14 for controlling an apparatus by means of the pointing device according to the invention is provided.

Embodiments of the invention are claimed by the dependent claims 2 to 12.

### Description of the invention

According to a first aspect of the invention, a pointing device for controlling an apparatus is provided. The device comprises a chamber comprising a cavity, an elastomer, which is arranged in the cavity of the chamber in order to provide a restoring force, and a manipulation member having a manipulation section and an embedded section, particularly wherein the manipulation section and the embedded section are integrally formed or mechanically connected. The manipulation member has an initial position, particularly with respect to the chamber, wherein the manipulation member is positioned at the initial position when no external force acts on the manipulation section of the manipulation member is provided.

In the context of the present specification, the term manipulation member describes a part which is adapted to be handled manually, particularly moved or exhibited to a mechanical force by an operator.

The manipulation section and the embedded section are positioned along a longitudinal axis of the manipulation member, particularly a symmetry axis or a rotational axis, and the embedded section is positioned in the cavity of the chamber and embedded by the elastomer.

According to a further preferred embodiment, the longitudinal axis extends through the centre of the cavity.

Preferably, the elastomer exerts no resulting mechanical force on the manipulation member when the manipulation member is positioned at the initial position. In particular, a system comprising the manipulation member and the elastomer is at a mechanical equilibrium when the manipulation member is positioned at the initial position. Furthermore, the elastomer is adapted to provide a restoring force to return the manipulation member to the initial position when the elastomer is deformed by the embedded section of the manipulation member.

The elastomer essentially, particularly completely fills the cavity comprised in the chamber. In particular, the elastomer fills a section of the volume of the cavity comprised in the chamber, wherein the section comprises at least 90 per cent, preferably at least 95 per cent, more preferably at least 99 per cent of the part of volume of the cavity comprised in the chamber, which is not filled by part of the manipulation member, particularly the embedded section, when the manipulation member is positioned at the initial position.

Advantageously, the elastomer reduces, particularly prevents ingress of particles, particularly dust, or reduces, particularly prevents ingress of liquid into the chamber of the pointing device.

Furthermore, the elastomer, which essentially fills the chamber of the pointing device advantageously allows a particularly simple, robust, and low cost design of the pointing device, wherein only a small number of components is used. This allows a cost-efficient production process as well as miniaturisation of the pointing device.

In certain embodiments, the pointing device comprises at least one layer of elastomer, wherein the at least one layer of elastomer essentially, particularly completely fills the cavity comprised in the chamber of the pointing device.

In certain embodiments, the elastomer essentially seals, particularly completely seals, the chamber from ingress of dust and/or liquid.

In certain embodiments, no water enters the chamber when the lowest point of enclosures of the pointing device is positioned in a body of water 1 metre below the surface of the body of water for 30 minutes as a result of the elastomer filling the chamber.

In certain embodiments the pointing device has an IP67 rating (dust tight, immersion up to 1 metre) according to IEC standard 60529.

In certain embodiments, the pointing device comprises a measurement device adapted to remotely detect a position of at least a part of the manipulation member, particularly a position with respect to the chamber.

Therein, the term "remotely detect a position" is to be understood such that the measurement device is adapted to measure the position of the manipulation member without contacting the manipulation member if the measurement device is in proximity, particularly within a distance of less than 2 centimetres, more particularly 1 centimetre, even more particularly 0.5 centimetres of the manipulation member.

In certain embodiments, the measurement device comprises a magnetic device and at least one magnetic field sensor, wherein the magnetic device provides or is adapted to provide a magnetic field, and wherein the magnetic field sensor is adapted to detect the strength of the magnetic field and/ or alterations of the direction and/ or strength of the magnetic field, particularly as a result of a movement of the magnetic device.

In certain embodiments, the measurement device comprises at least two magnetic field sensors, wherein the magnetic field sensors are arranged at an angle of at least 60° with respect to each other around the longitudinal axis of the manipulation member when the manipulation member is positioned at an initial position.

In certain embodiments, the magnetic field sensors are positioned below the chamber, particularly wherein the distance of each magnetic field sensor to the lower boundary of the manipulation member is less than 2 cm when the manipulation member is positioned at the initial position.

Preferably four sensors are arranged at an angle of 80° to 100°; most preferably at an angle of 90°, or three sensors are arranged at an angle of 110° to 130°; most preferably at an angle of 120°.

In a further preferred embodiment, the sensors are protected by the elastomer against mechanical damage and/ or ingress of particles or liquid.

Advantageously, the at least two, particularly four magnetic field sensors allow a measurement of the position of the magnetic device in two dimensions perpendicular to the longitudinal axis of the manipulation member in the initial position, when the manipulation member is displaced from the initial position. Therefore, the position of the manipulation member may be determined in the two dimensions.

In certain embodiments, the measurement device comprises at least two magnetic field sensors, wherein the magnetic field sensors are positioned in the direction of the longitudinal axis, particularly parallel to the longitudinal axis.

Advantageously, magnetic field sensors positioned in the direction of the longitudinal axis allow a detection of the position of the manipulation member in the direction of the longitudinal axis, particularly wherein the manipulation member is usable as an analogue switch.

In certain embodiments, the magnetic device comprises an electromagnet.

According to an alternative embodiment, the magnetic device comprises a permanent magnet. Advantageously, a permanent magnet evokes a magnetic field without providing any electric current, which allows simple and cost efficient design of the pointing device.

In certain embodiments, the magnetic field sensor comprises a coil in order to detect alterations of the strength and/ or direction of the magnetic field.

According to a preferred embodiment, the magnetic field sensor comprises a Hall sensor in order to detect the strength of the magnetic field and/ or alterations of the magnetic field. Advantageously, in contrast to a coil a Hall sensor is adapted to detect the strength of static magnetic fields. Furthermore, Hall sensors advantageously provide analogue, linear signals over a wide range of magnetic field intensities.

In certain embodiments, the pointing device comprises at least one end stop, wherein particularly the end stop is integrally formed with the chamber, particularly positioned proximal to the manipulation section of the manipulation member and/ or proximal to the magnetic device, wherein the end stop is adapted to mechanically restrict a movement of the manipulation member.

Advantageously, the end stop may prevent mechanical damage to parts of the pointing device by movement of the manipulation member. Furthermore, the end stop advantageously provides feedback about the maximal displacement of the manipulation member to an operator, and/ or makes sure that the distance between the magnetic device and the magnetic field sensors is restricted such that the magnetic field intensity of the magnetic device is sufficiently strong to be detected by at least one of the magnetic field sensors.

In certain embodiments, the embedded section comprises at least one protrusion having a first maximum extension ME1 perpendicular to the longitudinal axis of the manipulation member. Therein, a section immediately adjacent to the protrusion has a second maximum extension ME2 perpendicular to the longitudinal axis of the manipulation member, and the first maximum extension and the second maximum extension have a ratio of ME1/ME2 = 1.8 to 3, preferably 2.1 to 2.5.

In certain embodiments, the embedded section comprises at least one recess having a first maximum extension ME1 perpendicular to the longitudinal axis of the manipulation member.

Therein, a section immediately adjacent to the recess has a second maximum extension ME2 perpendicular to the longitudinal axis of the manipulation member, and the first maximum extension and the second maximum extension have a ratio of ME1/ME2 = 0.3 to 0.5, preferably 0.4 to 0.45.

The protrusion or recess provides a form fit between the manipulation member and the elastomer, which provides a counter-force if the manipulation member is forced along the direction of the longitudinal axis by an operator. In this manner, damage to parts of the pointing device resulting from forcing the manipulation member is advantageously prevented.

In certain embodiments, the chamber comprises an opening at a position proximal to the magnetic device (and distal to the manipulation section of the manipulation member), wherein the maximum extension of the opening perpendicular to the longitudinal axis is smaller than the maximum extension of the protrusion of the embedded section of the manipulation member.

Such a protrusion mechanically restricts a movement of part of the manipulation member through the opening, which advantageously prevents damage to parts of the pointing device if the manipulation member is pressed down by an operator.

In certain embodiments, the pointing device comprises a switch, wherein the switch is adapted to provide a signal when an external force is applied to the manipulation member in the direction of the longitudinal axis.

In certain embodiments, the pointing device comprises an analogue switch, wherein the analogue switch is adapted to provide a signal when the manipulation member is displaced from the initial position in the direction of the longitudinal axis, and wherein the intensity of the signal is dependent on, particularly proportional to, the distance of the manipulation member from the initial position in the direction of the longitudinal axis.

In certain embodiments, the elastomer comprises, particularly is composed of, silicon and/ or polyurethane.

Advantageously, silicon and polyurethane are highly elastic materials.

In certain embodiments, the elastomer has a Young's modulus of ≤ 30 N/mm², particularly ≤ 20 N/mm², more particularly ≤ 10 N/mm², even more particularly ≤ 1 N/mm², most particularly ≤ 0.5 N/mm².

Advantageously, providing an elastomer comprising elastic materials having a Young's modulus in the ranges pointed out above, allows an operator to deform the elastomer by applying a relatively small force on the manipulation member.

In certain embodiments, the embedded section of the manipulation member is moulded with the elastomer.

In certain embodiments, the embedded part of the manipulation member is connected to the elastomer by cohesion or adhesion, particularly glued to the elastomer.

Advantageously, moulding or connecting the manipulation member with the elastomer allows an especially tight sealing of the cavity of the chamber, particularly against ingress of external dust or liquid, by means of the elastomer, and/ or the sensors.

In certain embodiments, the pointing device further comprises a processing unit, wherein the processing unit is adapted to process an input signal, preferably an analogue signal, generated by the magnetic field sensor in response to an alteration of the magnetic field provided by the magnetic device, such that an output signal is generated by the processing unit, wherein the output signal depends on the input signal.

According to a second aspect of the invention, a method for manufacturing a pointing device according to the first aspect of the invention is provided. Therein the chamber, the elastomer, and the manipulation member are provided, a section of the manipulation member is positioned in the cavity of the chamber, and an elastomer is filled into the cavity, such that the section of the manipulation member is embedded in the elastomer. In particular, the section is the embedded section of the pointing device, after the elastomer has been filled into the cavity.

In certain embodiments, the elastomer is filled into the cavity in its liquid state, more particularly by heating the elastomer and/ or an unpolymerised precursor form of the elastomer is filled into the cavity, after which the elastomer adopts its solid state by cooling and/ or polymerising in the cavity.

In certain embodiments, the chamber and the elastomer of the pointing device are separately fabricated and assembled to provide the pointing device.

Advantageously, filling the elastomer into the cavity represents a particularly easy, fast and low cost production step.

According to a third aspect of the invention, a method for controlling an apparatus by means of the pointing device according to the first aspect of the invention is provided.

In certain embodiments, the apparatus comprises a remote apparatus, particularly a device or machine, wherein the pointing device provides a signal, particularly an electric signal and preferably an analogue signal, which is utilized to provide an alteration of at least one physical parameter of the apparatus.

In certain embodiments, the apparatus comprises a vehicle, and/ or a toy, more particularly having an engine or an electric motor. Therein, the signal is particularly utilized to control at least one engine or motor comprised in the apparatus.

In certain embodiments, the apparatus comprises an electronic device, particularly a media player, or a computer, or a smart phone, or a tablet computer, or a game console. Therein, the signal is particularly utilized to move a cursor on a visual display of the apparatus.

Wherever alternatives for single separable features are laid out herein as "embodiments", it is to be understood that such alternatives may be combined freely to form discrete embodiments of the invention disclosed herein.

The invention is further illustrated by the following example and figure, from which further embodiments and advantages can be drawn. This example is meant to illustrate the invention but not to limit its scope.

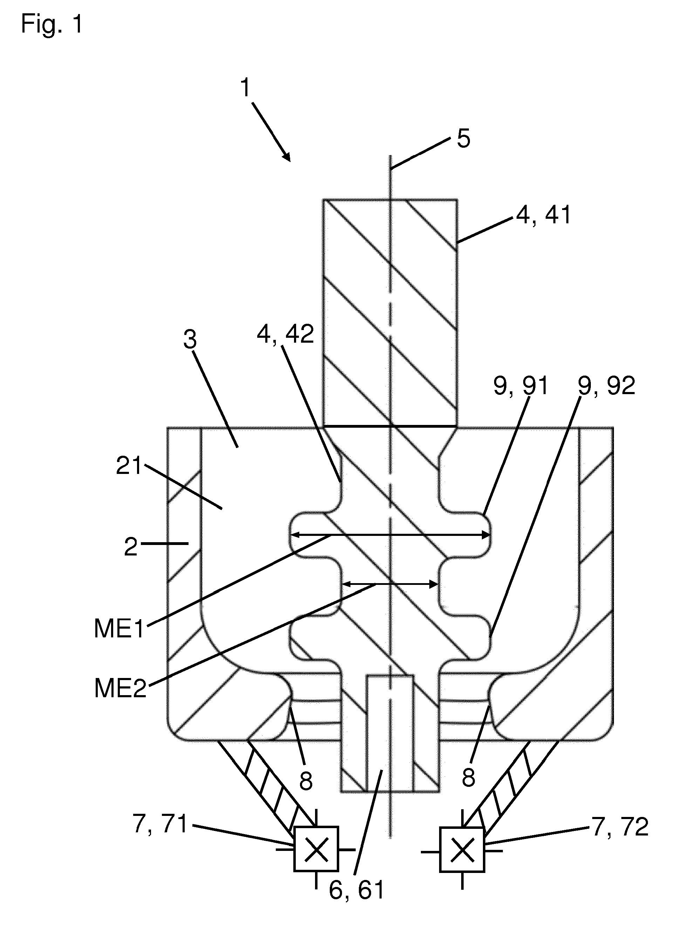

The only Fig. 1 shows a pointing device.

### Detailed description of the figure

Fig. 1 shows a cross section of a pointing device 1, particularly a joy stick, according to the present invention. The pointing device 1 comprises a chamber 2 with a cavity 21, which is comprised in the casing of the pointing device. The pointing device further comprises an elastomer 3, which is arranged in the cavity 21 of the chamber 2 and completely fills the cavity 21, and a manipulation member 4 comprising a manipulation section 41, which is positioned outside of the chamber 2, and an embedded section 42, which is positioned in the cavity 21 of the chamber 2 and is embedded in the elastomer 3, particularly moulded with the elastomer.

The manipulation section 41 and the embedded section 42 are integrally formed or mechanically connected, so that a movement of the manipulation section 41 immediately results in a corresponding movement of the embedded section 42.

The manipulation section 41 of the manipulation member 4 is positioned such that an operator may manually manipulate the manipulation section 41 of the manipulation member 4 by exerting a mechanical force on the manipulation section 41, so that the manipulation member 41 is moved by the external force.

The manipulation member 4 has a longitudinal axis 5, which may comprise a symmetry axis, particularly a rotational symmetry axis.

When no external force is applied to the manipulation section 41 of the manipulation member 4, the manipulation member 4 is positioned at an initial position, wherein the longitudinal axis 5 is essentially positioned at the centre of the pointing device 1, which represents the situation depicted in Fig. 1. The initial position coincides with an equilibrium position of the manipulation member 4, wherein the manipulation member 4 remains stationary.

When an external force is applied to the manipulation section 41 of the manipulation member 4, particularly by an operator, the elastomer 3 is deformed by the embedded section 42, such that the elastomer 3 provides a restoring force acting on the manipulation member 4 when the external force ceases to act on the manipulation member 4. Consequently, the manipulation member 4 is moved back to its initial position by the restoring force.

If the manipulation section 41 of the manipulation member 4 is moved to the left side, the manipulation member 4 is tilted around a pivotal point, which is located near the longitudinal axis 5, particularly within the embedded section 42 of the manipulation member 4, so that the distal end of the manipulation member 4 with respect to the manipulation section 41 is moved toward the right side. Similarly, if the manipulation section 41 of the manipulation member 4 is moved to the right side, the distal end of the manipulation member 4 with respect to the manipulation section 41 is moved toward the left side.

A magnetic device 6, particularly a permanent magnet 61, providing a magnetic field is connected to the embedded section 42 of the manipulation member at a distal end of the manipulation member 4 with respect to the manipulation section 41.

Two magnetic field sensors 7, particularly a first Hall sensor 71 and a second Hall sensor 72, which are adapted to detect the magnetic field and/ or alterations in the magnetic field provided by the magnetic device 6, are positioned below the chamber 2 in proximity to the manipulation member 4.

When the manipulation member 4 is positioned at the initial position, the magnetic field intensities at the first Hall sensor 71 and at the second Hall sensor 72 are essentially equal, resulting in equal signals of the first Hall sensor 71 and at the second Hall sensor 72.

If the distal end of the manipulation member 4 with respect to the manipulation section 41 is moved toward the left side, the magnetic device 6 is moved closer to the first Hall sensor 71 and farther away from the second Hall sensor 72, so that the magnetic field at the first Hall sensor 71 increases and the signal provided by the first Hall sensor 71 increases. Similarly, the magnetic field at the second Hall sensor 72 decreases and the signal provided by the second Hall sensor 72 decreases. In this manner the displacement of the manipulation member from the initial position can be measured by the two Hall sensors 71, 72.

The pointing device 1 further comprises an opening of the chamber 2 in proximity to the distal end of the manipulation member 4 (the end at which the magnetic device is attached) with an end stop 8, which mechanically restricts the movement of the manipulation member. Furthermore, the embedded section 42 of the manipulation member 4 comprises a first protrusion 91 and a second protrusion 92 providing a form fit of the elastomer 3 and the manipulation member 4, so that adhesive and/ or cohesive forces between the elastomer 3 and the manipulation member 4 are increased. If an external force is exerted by pressing on the manipulation member 4 in the direction of the longitudinal axis 5, the form fit achieved by the protrusions 91, 92 results in an opposing force, which restricts the movement of the manipulation member 4.

### List of reference signs

| | |
|---|---|
| Pointing device | 1 |
| Chamber | 2 |
| Cavity | 21 |
| Elastomer | 3 |
| Manipulation member | 4 |
| Manipulation section | 41 |
| Embedded section | 42 |
| Longitudinal axis | 5 |
| Magnetic device | 6 |
| Permanent magnet | 61 |
| Magnetic field sensor | 7 |
| First Hall sensor | 71 |
| Second Hall sensor | 72 |
| End stop | 8 |
| Protrusion | 9 |
| First protrusion | 91 |
| Second protrusion | 92 |
| First maximal extension | ME1 |
| Second maximal extension | ME2 |

## Claims

1. Pointing device (1) for controlling an apparatus, wherein the pointing device (1) comprises
a) a chamber (2) comprising a cavity (21),
b) an elastomer (3), which is arranged in the cavity (21) in order to provide a restoring force,
c) a manipulation member (4) having a manipulation section (41) and an embedded section (42), wherein
• the manipulation section (41) and the embedded section (42) are positioned along a longitudinal axis (5) of the manipulation member (4), and
• the embedded section (42) is positioned in the cavity (21) and embedded by the elastomer (3),
**characterized in that**
the elastomer (3) essentially fills the cavity (21).

2. Pointing device (1) according to claim 1, wherein the elastomer (3) essentially seals the chamber (2) from ingress of dust and/or liquid.

3. Pointing device (1) according to claim 1 or 2, wherein the pointing device (1) comprises a measurement device adapted to remotely detect a position of at least a part of the manipulation member (4).

4. Pointing device (1) according to claim 3, wherein the measurement device comprises a magnetic device (6) and at least one magnetic field sensor (7), wherein the magnetic device (6) provides or is adapted to provide a magnetic field, and wherein the magnetic field sensor (7) is adapted to detect the strength of the magnetic field and/ or alterations of the magnetic field provided by the magnetic device (6).

5. Pointing device (1) according to claim 4, wherein the measurement device comprises at least two magnetic field sensors (7), wherein the magnetic field sensors (7) are arranged at an angle of at least 60° with respect to each other around the longitudinal axis (5) of the manipulation member (4) when the manipulation member (4) is positioned at an initial position.

6. Pointing device (1) according to claim 4 or 5, wherein the magnetic device (6) comprises a permanent magnet (61).

7. Pointing device (1) according to any one of the claims 4 to 6, wherein the magnetic field sensor (7) comprises a Hall sensor (71, 72) in order to detect the strength of the magnetic field and/ or alterations of the magnetic field.

8. Pointing device (1) according to any one of the preceding claims, wherein the pointing device (1) comprises at least one end stop (8), wherein the end stop (8) is adapted to restrict a movement of the manipulation member (4).

9. Pointing device (1) according to any one of the preceding claims, wherein the embedded section (42) comprises
i. at least one protrusion (9) having a first maximum extension ME1 perpendicular to the longitudinal axis (5) of the manipulation member (4), wherein a section immediately adjacent to the protrusion (9) has a second maximum extension ME2 perpendicular to the longitudinal axis (5) of the manipulation member (4), and the first maximum extension and the second maximum extension have a ratio of ME1/ME2 = 1.8 to 3, and/ or
ii. at least one recess having a first maximum extension ME1 perpendicular to the longitudinal axis (5) of the manipulation member (4), wherein a section immediately adjacent to the recess has a second maximum extension ME2 perpendicular to the longitudinal axis (5) of the manipulation member (4), and the first maximum extension and the second maximum extension have a ratio of ME1/ME2 = 0.3 to 0.5.

10. Pointing device (1) according to any one of the preceding claims, wherein the elastomer (3) comprises silicon or polyurethane.

11. Pointing device (1) according to any one of the preceding claims, wherein the embedded section (42) of the manipulation member (4) is moulded with the elastomer (3).

12. Pointing device (1) according to any one of the preceding claims, wherein the embedded section (42) of the manipulation member (4) is connected to the elastomer (3) by cohesion or adhesion, particularly glued to the elastomer (3).

13. Pointing device (1) according to any one of the preceding claims, wherein the pointing device (1) further comprises a processing unit, wherein the processing unit is adapted to process an input signal generated by the magnetic field sensor (7), and to generate an output signal, wherein the output signal depends on the input signal.

14. Method for manufacturing a pointing device (1) according to any one of the claims 1 to 13, wherein the chamber (2), the elastomer (3), and the manipulation member (4) are provided, a section of the manipulation member (4) is positioned in the cavity (21), and an elastomer (3) is filled into the cavity (21), such that the section of the manipulation member is embedded in the elastomer (3)

15. Method for controlling an apparatus by means of the pointing device (1) according to any one of the claims 1 to 13.
